# EUROPEAN PATENT SPECIFICATION

(11) **EP 3 343 009 B1**
(45) Date of publication and mention of the grant of the patent: **17.05.2023**
(21) Application number: 16207572.5
(22) Date of filing: 30.12.2016
(51) Int. Cl.: F02F 7/00, F01M 1/06, F16C 35/02, F16M 1/025, F16C 9/02

(54) **CRANKCASE FOR AN INTERNAL COMBUSTION ENGINE**
KURBELWELLENGEHÄUSE FÜR EINEN VERBRENNUNGSMOTOR
CARTER DE VILEBREQUIN POUR UN MOTEUR À COMBUSTION INTERNE

(43) Date of publication of application: 04.07.2018
(73) Proprietor: Caterpillar Motoren GmbH & Co. KG, 24159 Kiel (DE)
(72) Inventor: WITT, Frank, 24582 Bordesholm (DE); ABRAHAM, Volker, 24159 Kiel (DE)
(74) Representative: Novagraaf Group

(56) References cited:
- DE-B- 1 251 587
- GB-A- 1 265 781
- JP-A- H10 196 635
- JP-U- S6 328 026
- US-A- 4 189 193
- US-A- 5 299 871

## Description

### Technical Field

This disclosure relates to the field of internal combustion engines, in particular to the field of crankcases and more particularly to the field of crankcase and bearing cap construction.

### Background

An internal combustion engine generally has an engine block that defines one or more cylinders. Each cylinder may accommodate a piston that is reciprocatingly disposed therein. Each cylinder with a respective cylinder head forms a combustion chamber. A fuel and air mixture may be combusted in the combustion chambers. The pistons may be moved between top dead center and bottom dead center positions by a crankshaft that is positioned below the cylinders. The crankshaft may be disposed in a crankcase. As a piston is moved toward the top dead center position, the fuel and air mixture in the combustion chamber is compressed. The compressed mixture combusts and expands, driving the piston downward toward the bottom dead center position.

The crankcase must have high strength and high rigidity in order to withstand the reciprocating cylinder load and for the rotation of the crankshaft. Generally, in order to provide the required rigidity, a transverse bolt may connect the main bearing cap to the crankcase. Crankcases may include fluid channels that are formed therein. The fluid channels may enable transfer of fluids within the internal combustion engine. The fluid channels may include a lubrication system for distribution of lubricating oil in the crankcase.

US4616610 discloses a lubricating apparatus in an internal combustion engine of the horizontal type in which a main oil gallery for feeding oil to engine portions to be lubricated is provided substantially parallel to the engine crank shaft in the bearing cap secured to engine block for rotatably supporting the crank shaft. An oil filter is provided on the bearing cap at a central portion in the direction of the crank shaft. Oil passages are formed in the bearing cap for conducting the oil from an oil pump to the oil filter and then from the oil filter to the central portion of said main gallery.

The present disclosure is directed, at least in part, to improving or overcoming one or more aspects of the prior art system.

### Brief Summary of the Invention

In a first aspect, the present invention describes a crankcase for an internal combustion engine. The crankcase comprises an upper portion for housing a camshaft; a lower portion for housing a crankshaft; a bearing cap for rotatably supporting the crankshaft, the bearing cap being bolted to the lower portion by at least one transverse bolt at a connection locus wherein the bearing cap is separated from the lower portion by a lateral interspace at the connection locus; and an oil drain passage extending from the transverse bolt to a crankcase base wherein the oil drain passage is configured to permit flow of oil from around the transverse bolt towards crankcase base. The oil drain passage is positioned in the bearing cap. An axial side of the oil drain passage is in fluid communication with the lateral interspace. The oil drain passage has an inlet positioned adjacent to a shaft of the transverse bolt. Further, the oil drain passage is formed partially in each of the corresponding portions of the bearing cap and the lower portion.

### Brief Description of the Drawings

The foregoing and other features and advantages of the present disclosure will be more fully understood from the following description of various embodiments, when read together with the accompanying drawings, in which:
Fig. 1 is an isometric view of an end of a crankcase according to the present disclosure;
Fig. 2 is an isometric view of a bearing cap according to the present disclosure;
Fig. 3 is a partial sectional view through an end of the bearing cap of fig. 2;
Fig. 4 is a close-up partial sectional view of the connection locus between a lower portion of the crankcase and a bearing cap according to the present disclosure; and
Fig. 5 is a schematic of the oil distribution system in the crankcase of Fig. 1.

### Detailed Description

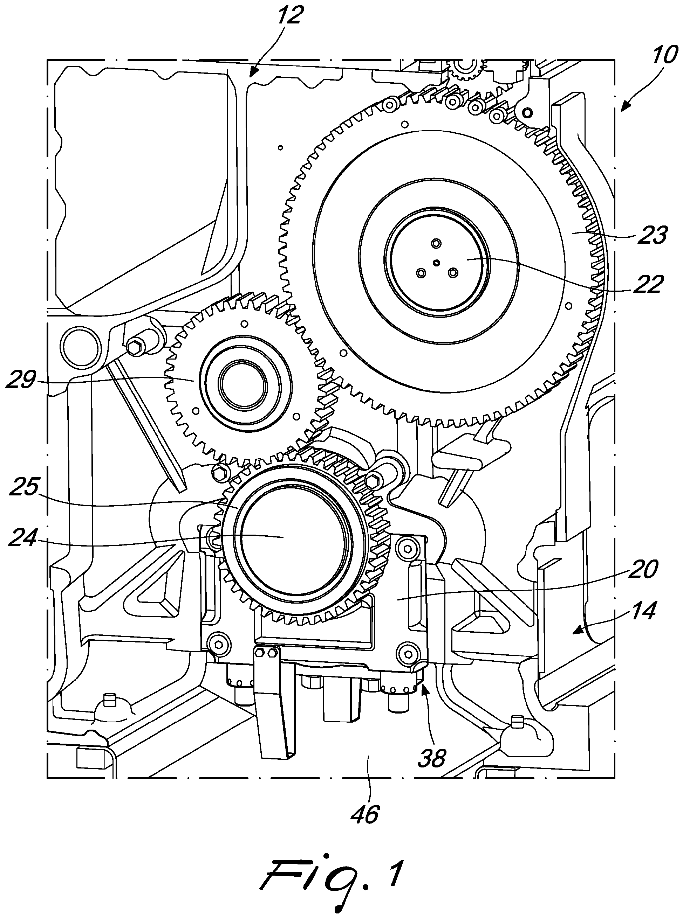

This disclosure generally relates to a bearing cap and a crankcase for an internal combustion engine. Fig. 1 illustrates an end of the crankcase **10.** The crankcase **10** includes an upper portion **12** and a lower portion **14.** The upper portion **12** houses a camshaft **22.** Upper portion **12** may support the camshaft **22** and associated valve mechanism. The camshaft **22** may have a camshaft gear **23.**

The lower portion **14** is connected to the engine (not shown) through bolt connections. The lower portion **14** houses a crankshaft **24.** The lower portion **14** may support the crankshaft **24** through a bearing shell (not shown). The crankshaft **24** may have a crankshaft gear **25.** The lower portion **14** may by supplied with oil through an oil delivery system (not shown). Oil may be used to lubricate the components in the crankcase including the crankshaft **24.** The camshaft **22** is connected to crankshaft **24** via an idler gear **29.**

Crankcase **10** includes a crankcase base **38.** The crankcase base **38** is the bottom part of the lower portion **14.** Crankcase base **38** may have a valve for change of oil. When the valve is opened oil may flow downwards due to the gravity. The crankcase **10** further comprises an oil sump **46.** The oil sump **46** is mounted to the crankcase base **38.**

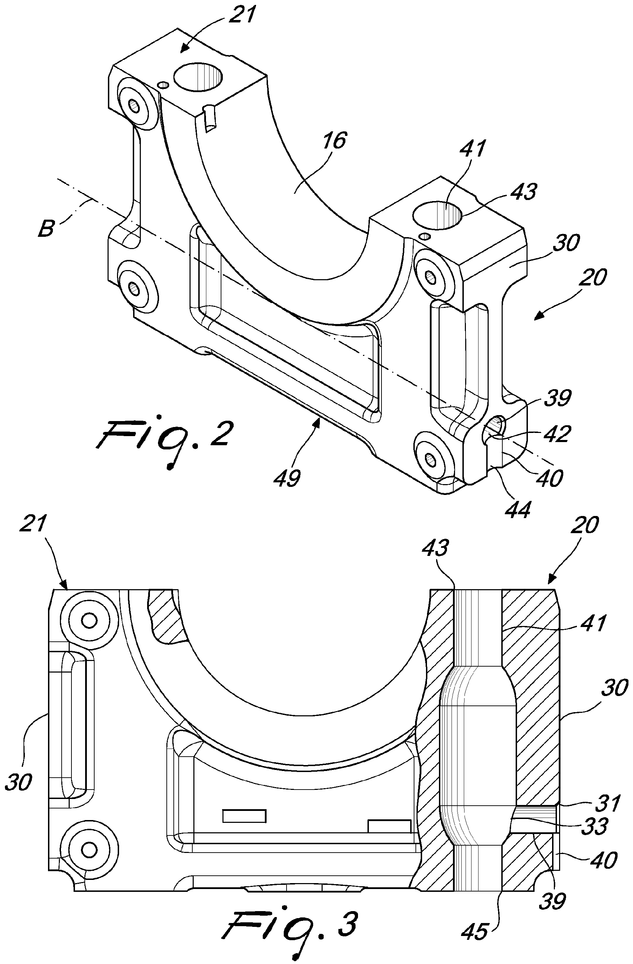

The crankcase **10** includes a bearing cap **20.** The bearing cap **20** rotatably supports the crankshaft **24.** With reference to figs. 2 and 3, bearing cap **20** includes a body **21.** Body **21** carries the bearing shell **16** that rotatably supports the crankshaft **24.** Bearing cap **20** inlcudes a longitudinal axis **B.** Bearing cap **20** includes a cap base **49** on the body **21.** Cap base **49** is formed on the bearing cap **20** opposite to the bearing shell **16.** Cap base **49** forms part of the crankcase base **38.**

Bearing cap **20** may have a first cap canal **39** and a second cap canal **41.** First cap canal **39** may extend axially into the body **21** of the bearing cap **20.** First cap canal **39** may extend in a direction parallel to the longitudinal axis **B.** First cap canal **39** may extend partially into the bearing cap **20.** First cap canal **39** may have first and second openings **31, 33.** First opening **31** may be disposed on a side of the bearing cap **20.** First opening **31** may be disposed on a cap lateral surface **30.** Cap lateral surface **30** may extend across the side of the bearing cap **20** adjacent to the cap base **49** and the bearing shell **16.** In an embodiment, bearing cap **20** may have a pair of cap lateral surfaces **30** on opposite sides. The bearing cap **20** may have a pair of first cap canals **39.** The pair of first cap canals **39** may be disposed on opposite sides of the bearing cap **20.** The pair of first cap canals **39** may be disposed on respective cap lateral surfaces **30.**

Second cap canal **41** may extend transversely in the body **21** of the bearing cap **20.** Second cap canal **41** may extend in a direction perpendicular to the longitudinal axis **B.** Second cap canal **41** may extend through the body **21** of the bearing cap **20.** Second cap canal **41** may have first and second openings **43, 45** on opposite sides of the bearing cap **20.** Second cap canal **41** may be positioned adjacent to the bearing shell **16.** In an embodiment, bearing cap **20** may have a pair of second cap canals **41** positioned at opposite sides of the bearing shell **16.**

First cap canal **39** may intersect with second cap canal **41.** First cap canal **39** may be perpendicular relative to the second cap canal **41.** Second opening **33** of the first cap canal **39** may open onto the second cap canal **41.** First cap canal **39** may be in communication with the second cap canal **41** through the second opening **33.**

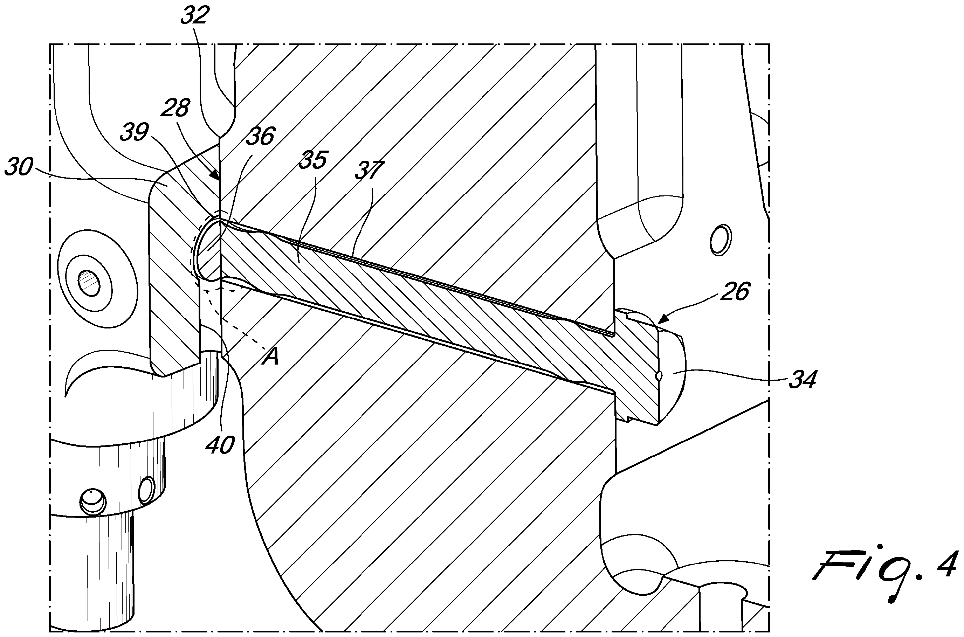

With reference to fig. 4, the bearing cap **20** is bolted to the crankcase **10.** The bearing cap **20** is further bolted to the lower portion **14.** Bearing cap **20** is bolted by at least one transverse bolt **26.** The transverse bolt **26** is positioned perpendicular to the longitudinal axis of the crankcase **10.** The transverse bolt **26** may be parallel to the longitudinal axis **B** of the bearing cap **20.**

Transverse bolt **26** is inserted into the crankcase **10** with the bolt head **34** disposed on a side opposite to a crankcase surface **32** that faces the bearing cap **20.** The crankcase surface **32** may face the lateral cap surface **30.** The free end **36** of the transverse bolt **26** may be inserted into the bearing cap **20.** The free end **36** of the transverse bolt **26** may be inserted into the lateral cap surface **30.** Shaft **35** of the transverse bolt **26** extends through the lower portion **14.**

Crankcase **10** includes a case canal **37** for the insertion of the transverse bolt **26.** Case canal **37** extends through the lower portion **14.** Case canal **37** accommodates the shaft **35.** The first cap canal **39** may enable the insertion of the free end **36** of the transverse bolt **26.** Case canal **37** and first cap canal **39** may be in alignment with the bearing cap **20** mounted to the lower portion **14.**

Transverse bolt **26** may connect the bearing cap **20** to the lower portion **14** at a connection locus **A.** The connection locus **A** may define the area adjacent to the connection between the bearing cap **20** and the lower portion **14.** In an embodiment, the connection locus **A** may be the point of connection between the bearing cap **20** and the lower portion **14.** Connection locus **A** may be the adjacent area that radially surrounds the transverse bolt **26** and that extends from the lower portion **14** to the bearing cap **20.** Transverse bolt **26** may extend through the connection locus **A** between the bearing cap **20** and the lower portion **14.**

The bearing cap **20** is separated from the lower portion **14** by a lateral interspace **28.** The lateral interspace **28** is defined by the separation between the cap lateral surface **30** from the crankcase surface **32.** Crankcase **10** may have a pair of crankcase surfaces **32.** The crankcase surfaces **32** may be formed on opposite sides facing the pair of cap lateral surfaces **30.** The crankcase **10** may have a pair of case canals **37.** The pair of case canals **37** may be open onto respective crankcase surfaces **32.**

The lateral interspace **28** may be defined by the separation between the cap lateral surface **30** from the crankcase surface **32** at the connection locus **A.** Lateral interspace **28** may extend in a direction perpendicular to the longitudinal axis of the crankcase **10.** Lateral interspace **28** may extend in a direction perpendicular to the longitudinal axis **B** of the crankcase **10.** Lateral interspace **28** may extend in a direction perpendicular to the transverse bearing cap **20.** In an embodiment, the lateral interspace **28** may extend along the entire cap lateral surface **30.** Transverse bolt **26** may extend through the lateral interspace **28** between the bearing cap **20** and the lower portion **14.**

With reference to figs. 2 and 3, the crankcase **10** includes an oil drain passage **40.** Oil drain passage **40** may be linear. Oil drain passage **40** extends transversely in the bearing cap **14.** Oil drain passage **40** may extend in a direction perpendicular to the longitudinal axis **B.** Oil drain passage **40** may extend in a direction parallel to the second cap canal **41.** Oil drain passage **40** extends partially through the bearing cap **20.** The oil drain passage **40** includes an inlet **42** for entry of oil. The oil drain passage **40** includes an outlet **44** for exit of oil. The outlet **44** is positioned over the oil sump **46** such that oil from around the transverse bolt **26** flows to the oil sump **46.** The oil drain passage **40** is vertically orientated relative to the crankcase **10.** The oil drain passage **40** may be formed as a tubular channel.

The oil drain passage **40** extends from the transverse bolt **26** to the crankcase base **38.** Oil drain passage **40** may be substantially perpendicular to the transverse bolt **26.** The oil drain passage **40** is configured to permit flow of oil from around the transverse bolt **26** towards crankcase base **38.** Oil accumulated around the transverse bolt **26** flows into the oil drain passage **40** towards the crankcase base **38.**

Oil drain passage **40** is positioned in the bearing cap **20.** Oil drain passage **40** may be in communication with the first cap canal **39.** The oil drain passage **40** may be configured to permit flow of oil from around the first cap canal **39** towards cap base **49.** With the transverse bolt **36** inserted, the oil drain passage **40** may be positioned adjacent the free end **36** of the transverse bolt **26.**

Inlet **42** is formed in the bearing cap **20.** Inlet **42** opens onto the first cap canal **39.** Inlet **42** connects the oil drain passage **40** with the first cap canal **39.** Oil drain passage **40** is in communication with the first cap canal **39** through the second inlet **42.** Inlet **42** may be positioned adjacent the free end **36** of the transverse bolt **26.** Outlet **44** is disposed at the cap base **49** on the bearing cap **20.**

The oil drain passage **40** is positioned in the bearing cap **20** such that an axial side is in communication with the lateral interspace **28.** The inlet **42** is positioned in the bearing cap **20** so as to have a side in communication with the lateral interspace **28.** Outlet **44** is disposed in the bearing cap **20** so as to have a side in communication with the lateral interspace **28.**

In an embodiment, the oil drain passage **40** is positioned in the lower portion **14** of the crankcase **10.** Oil drain passage **40** may be in communication with the case canal **37.** The oil drain passage **40** may be configured to permit flow of oil from around the case canal **37** towards crankcase base **38.** With the transverse bolt **36** inserted, oil drain passage **40** is positioned adjacent the transverse bolt **26.** Oil drain passage **40** is positioned adjacent the shaft **35** of the transverse bolt **26.**

Inlet **42** may be formed in the lower portion **14.** Inlet **42** may open onto the case canal **37.** Inlet **42** may connect the oil drain passage **40** with the case canal **37.** Oil drain passage **40** may be in communication with the case canal **37** through the inlet **42.** Inlet **42** may be positioned adjacent the shaft **35** of the transverse bolt **26.** Outlet **44** may be disposed on crankcase base **38** the lower portion **14.**

In the preferred embodiment, the oil drain passage **40** is positioned in the lower portion **14** such that an axial side is in communication with the lateral interspace **28.** The inlet **42** is positioned in the lower portion **14** so as to have a side in communication with the lateral interspace **28.** Outlet **44** is disposed in the lower portion **14** so as to have a side in communication with the lateral interspace **28.**

In the preferred embodiment, oil drain passage **40** is positioned so as to have a central axial portion thereof in communication with the lateral interspace **28.** Oil drain passage **40** may straddle the lateral interspace **28.** The oil drain passage **40** is formed partially in each of the corresponding portions of the bearing cap **20** and the lower portion **14.** Oil drain passage **40** is formed upon mounting of the bearing cap **20** to the crankcase **10.** The respective portions of the oil drain passage **40** is formed on the opposite surfaces defining the lateral interspace **28.** A portion of the oil drain passage **40** is formed on the cap lateral surface **30** and the corresponding portion of the oil drain passage **40** is formed on the crankcase surface **32.** Oil drain passage **40** is in communication with the first cap canal **39** and the case canal **37.** Oil drain passage **40** is positioned so as to be adjacent the free end **36** and the shaft **35.**

The inlet **42** and outlet **44** may be positioned so as to have respective central portions in communication with the lateral interspace **28.** Inlet **42** and outlet **44** may each straddle the lateral interspace **28.** The inlet **42** and outlet **44** may be partially formed in the respective corresponding portions of the bearing cap **20** and the lower portion **14.** The respective portions of the inlet **42** and and outlet **44** may be formed on the opposite surfaces defining the lateral interspace **28.** Respective portions of the inlet **42** and the outlet **44** may be formed on the cap lateral surface **30** and the crankcase surface **32.** Inlet **42** and outlet **44** may be in communication with the first cap canal **39** and the case canal **37.** Inlet **42** and outlet **44** may be positioned so as to be adjacent the free end **36** and the shaft **35.**

With reference to figs. 1 and 2, in an embodiment, the crankcase **10** further comprises at least two transverse bolts **26.** The transverse bolts **26** may be positioned at opposite sides of the bearing cap **20.** The transverse bolts **26** may have respective connection loci **A.** Each transverse bolt **26** may be inserted into respective the first cap canal **39** and the case canal **37** of the crankcase **10.** The crankcase **10** may comprise at least two oil drain passages **40** positioned at opposite sides of the bearing cap **20.** The crankcase **10** may have respective lateral interspaces **28** that extend along opposite sides of the bearing cap **20.**

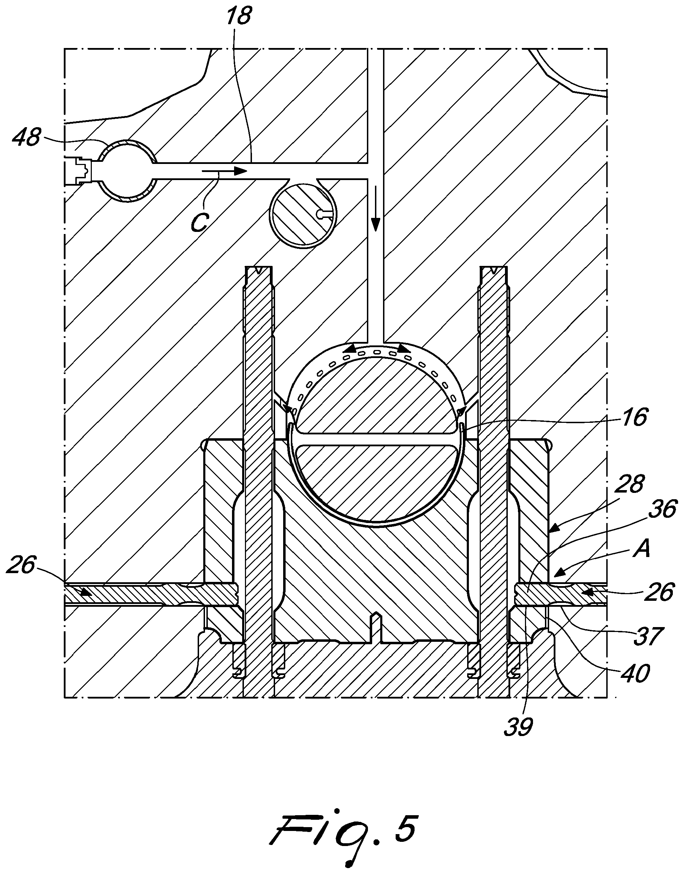

Fig. 5 illustrates an oil delivery system **18** in the crankcase **10.** Oil delivery system **18** comprises a main oil gallery **48** that delivers oil to area around the bearing shell **16.** Oil may flow from the bearing shell **16** to spray nozzles for delivery to components in the crankcase **10** along the oil flow path **C.** A portion of oil that is delivered to the components may accumulate in the area around the transverse bolt **26.** Oil may move into the oil drain passage 40 from the area around the transverse bolt **26.**

The skilled person would appreciate that foregoing embodiments may be modified or combined to obtain the crankcase **10** of the present disclosure.

### Industrial Applicability

This disclosure describes a crankcase **10** having an oil drain passage. During operation of the internal combustion engine, lubricating oil may be sprayed onto the components in the crankcase **10.** The area around the transverse bolt **26** may become oil filled. The first cap canal **39** and the case canal **37** may become oil filled. The lubricating oil is transported from the space around the transverse bolt **26,** in the first cap canal **39** and the case canal **37,** to the lateral interspace **28** between the bearing cap **20** and the lower portion **14** of the crankcase **10.** The lateral interspace **28** between the bearing cap **20** and the lower portion **14** may be infiltrated by oil that may result in build-up of carbon deposits and frettings as a result of pressure and/or the temperature at the lateral interspace **28.** The oil drain passage **40** guides the lubricating oil away from the lateral interspace **28** so as to reduce the build-up of carbon deposits and frettings.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein.

## Claims

1. A crankcase (10) for an internal combustion engine, the crankcase (10) comprising:
an upper portion (12) for housing a camshaft (22);
a lower portion (14) for housing a crankshaft (24);
a bearing cap (20) for rotatably supporting the crankshaft (24), the bearing cap (20) being bolted to the lower portion (14) by at least one transverse bolt (26) at a connection locus (B) wherein the bearing cap (20) is separated from the lower portion (14) by a lateral interspace (28) at the connection locus (B); and
an oil drain passage (40) extending from the transverse bolt (26) to a crankcase base (38) wherein the oil drain passage (40) is configured to permit flow of oil from around the transverse bolt (26) towards crankcase base (38) and wherein the oil drain passage (40) is positioned in the bearing cap (20), an axial side of the oil drain passage (40) being in communication with the lateral interspace (28),
wherein the oil drain passage (40) has an inlet (42) positioned adjacent a shaft (35) of the transverse bolt (26),
wherein the oil drain passage (40) being formed partially in each of the corresponding portions of the bearing cap (20) and the lower portion (14).

2. The crankcase (10) of claims 1 further comprising an oil sump (46) mounted to the crankcase base (38) wherein the oil drain passage (40) has an outlet (44) positioned over the oil sump (46) such that oil from around the transverse bolt (26) flows to the oil sump (46).

3. The crankcase (10) of any one of preceding claims wherein the oil drain passage (40) is vertically orientated relative to the crankcase (10) and is substantially perpendicular to the transverse bolt (26).

4. The crankcase (10) of any one of preceding claims wherein the oil drain passage (40) is formed as a tubular channel.

5. The crankcase (10) of any one of preceding claims comprising at least two transverse bolts (26) positioned at opposite sides of the bearing cap (20).

6. The crankcase (10) of claim 5 comprising at least two oil drain passages (40) positioned at opposite sides of the bearing cap (20).

7. The crankcase (10) of claims 5 or 6 comprising two lateral interspaces (28) extending along opposite sides of the bearing cap (20).

## Patentansprüche

1. Kurbelgehäuse (10) für einen Verbrennungsmotor, das Kurbelgehäuse (10) umfassend:
einen oberen Abschnitt (12) zum Unterbringen einer Nockenwelle (22);
einen unteren Abschnitt (14) zum Unterbringen einer Kurbelwelle (24);
einen Lagerdeckel (20) zum drehbaren Tragen der Kurbelwelle (24), wobei der Lagerdeckel (20) mit dem unteren Abschnitt (14) durch mindestens einen Querbolzen (26) an einem Verbindungsort (B) verbolzt ist, wobei der Lagerdeckel (20) von dem unteren Abschnitt (14) durch einen seitlichen Zwischenraum (28) an dem Verbindungsort (B) getrennt ist; und
einen Ölablaufkanal (40), der sich von dem Querbolzen (26) zu einer Kurbelgehäusebasis (38) erstreckt, wobei der Ölablaufkanal (40) konfiguriert ist, um einen Ölfluss von um den Querbolzen (26) herum zu der Kurbelgehäusebasis (38) hin zu ermöglichen und wobei der Ölablaufkanal (40) in dem Lagerdeckel (20) positioniert ist, wobei eine axiale Seite des Ölablaufkanals (40) mit dem seitlichen Zwischenraum (28) in Kommunikation ist,
wobei der Ölablaufkanal (40) einen Einlass (42), der angrenzend an eine Welle (35) des Querbolzens (26) positioniert ist, aufweist,
wobei der Ölablaufkanal (40) in jedem der entsprechenden Abschnitte des Lagerdeckels (20) und des unteren Abschnitts (14) teilweise ausgebildet ist.

2. Kurbelgehäuse (10) nach Anspruch 1, ferner umfassend einen Ölsumpf (46), der an der Kurbelgehäusebasis (38) montiert ist, wobei der Ölablaufkanal (40) einen Auslass (44) aufweist, der über dem Ölsumpf (46) derart positioniert ist, dass Öl von um dem Querbolzen (26) herum zu dem Ölsumpf (46) fließt.

3. Kurbelgehäuse (10) nach einem der vorstehenden Ansprüche, wobei der Ölablaufkanal (40) bezüglich des Kurbelgehäuses (10) vertikal ausgerichtet ist und im Wesentlichen senkrecht zu dem Querbolzen (26) ist.

4. Kurbelgehäuse (10) nach einem der vorstehenden Ansprüche, wobei der Ölablaufkanal (40) als eine rohrförmige Rinne ausgebildet ist.

5. Kurbelgehäuse (10) nach einem der vorstehenden Ansprüche, umfassend mindestens zwei Querbolzen (26), die an gegenüberliegenden Seiten des Lagerdeckels (20) positioniert sind.

6. Kurbelgehäuse (10) nach Anspruch 5, umfassend mindestens zwei Ölablaufkanäle (40), die an gegenüberliegenden Seiten des Lagerdeckels (20) positioniert sind.

7. Kurbelgehäuse (10) nach Anspruch 5 oder 6, umfassend zwei seitliche Zwischenräume (28), die sich entlang gegenüberliegender Seiten des Lagerdeckels (20) erstrecken.

## Revendications

1. Carter de vilebrequin (10) destiné à un moteur à combustion interne, le carter de vilebrequin (10) comprenant :
une partie supérieure (12) destinée à loger un arbre à cames (22) ;
une partie inférieure (14) destinée à loger un vilebrequin (24) ;
un chapeau de palier (20) destiné à supporter de manière rotative le vilebrequin (24), le chapeau de palier (20) étant boulonné sur la partie inférieure (14) par au moins un boulon transversal (26) au niveau d'un locus de liaison (B) dans lequel le chapeau de palier (20) est séparé de la partie inférieure (14) par un espace intermédiaire latéral (28) au niveau du locus de liaison (B) ; et
un passage de drainage d'huile (40) s'étendant depuis le boulon transversal (26) jusqu'à une base de carter de vilebrequin (38) dans lequel le passage de drainage d'huile (40) est conçu pour permettre un écoulement d'huile depuis autour du boulon transversal (26) vers la base de carter de vilebrequin (38) et dans lequel le passage de drainage d'huile (40) est positionné dans le chapeau de palier (20), un côté axial du passage de drainage d'huile (40) étant en communication avec l'espace intermédiaire latéral (28),
dans lequel le passage de drainage d'huile (40) a une entrée (42) positionnée à proximité d'un arbre (35) du boulon transversal (26),
dans lequel le passage de drainage d'huile (40) est formé partiellement dans chacune des parties correspondantes du chapeau de palier (20) et de la partie inférieure (14).

2. Carter de vilebrequin (10) selon la revendication 1, comprenant en outre un carter d'huile (46) monté sur la base de carter de vilebrequin (38) dans lequel le passage de vidange d'huile (40) a une sortie (44) positionnée sur le carter d'huile (46) de telle sorte que l'huile autour du boulon transversal (26) s'écoule vers le carter d'huile (46).

3. Carter de vilebrequin (10) selon l'une quelconque des revendications précédentes, dans lequel le passage de drainage d'huile (40) est orienté verticalement par rapport au carter de vilebrequin (10) et est sensiblement perpendiculaire au boulon transversal (26).

4. Carter de vilebrequin (10) selon l'une quelconque des revendications précédentes, dans lequel le passage de drainage d'huile (40) est formé comme un canal tubulaire.

5. Carter de vilebrequin (10) selon l'une quelconque des revendications précédentes, comprenant au moins deux boulons transversaux (26) positionnés sur des côtés opposés du chapeau de palier (20).

6. Carter de vilebrequin (10) selon la revendication 5, comprenant au moins deux passages de drainage d'huile (40) positionnés sur des côtés opposés du chapeau de palier (20).

7. Carter de vilebrequin (10) selon les revendications 5 ou 6 comprenant deux espaces intermédiaires latéraux (28) s'étendant le long des côtés opposés du chapeau de palier (20).
